# EUROPÄISCHE PATENTANMELDUNG

(11) **EP 3 376 256 A1**
(43) Veröffentlichungstag der Anmeldung: **19.09.2018**
(21) Anmeldenummer: 17209899.8
(22) Anmeldetag: 22.12.2017
(51) Int. Cl.: G01S 13/87, G01S 7/40, G01S 7/41, G01S 13/42, G01S 13/88, G01S 5/02

(54) **VERFAHREN ZUR POSITIONSBESTIMMUNG UND RADARSYSTEM**

(30) Priorität: 15.03.2017 DE 102017204297
(71) Anmelder: MBDA Deutschland GmbH, 86529 Schrobenhausen (DE)
(72) Erfinder: Seebens, Achim, 86529 Schrobenhausen (DE)
(74) Vertreter: Isarpatent

(57) **Zusammenfassung**

Ein Verfahren zur Positionsbestimmung eines mobilen Radarsystems umfasst die Schritte des Abtastens der Umgebung des mobilen Radarsystems von der tatsächlichen geographischen Position aus mit Radarstrahlen, des Erzeugens einer nach Azimut, Elevation und Entfernung aufgelösten Clutter-Map aus Echosignalen der zur Abtastung verwendeten Radarstrahlen, des Extrahierens eines lokalen Landschaftshorizontprofils aus der erzeugten Clutter-Map mit einer Sequenz aus 2-Tupeln mit Azimut- und Elevationswinkelwert, welcher die Grenzlinie zwischen Himmel und Erde markiert, des Vergleichens des lokalen Landschaftshorizontprofils mit einer Vielzahl von virtuellen Landschaftshorizontprofilen, welche durch Berechnung aus digitalen Geländemodellen der ungefähren Umgebung des mobilen Radarsystems ermittelt werden, und des Festlegens der tatsächlichen Position des mobilen Radarsystems als die demjenigen der Vielzahl von virtuellen Landschaftshorizontprofilen zugeordnete geographische Position, dessen Vergleich mit dem lokalen Landschaftshorizontprofil die höchste Korrelation aufweist.

## Beschreibung

### TECHNISCHES GEBIET

Die Erfindung betrifft ein Verfahren zur Positionsbestimmung, insbesondere für mobile Radarsysteme, sowie ein mobiles Radarsystem.

### TECHNISCHER HINTERGRUND

Mobile Radarsysteme benötigen ihre geographische Position, um die gewonnenen Messdaten in globale Koordinatensysteme präzise und verlässlich umrechnen zu können. Ziele des Radarsystems können dadurch genau lokalisiert werden, insbesondere bei der Zusammenarbeit mehrerer Radarsysteme oder eines Radarsystems mit anderen Datenquellen wie optischen Sensoren, Effektoren, Datenlinks oder ähnlichen Systemen.

Eine sehr verlässliche Möglichkeit, die geographische Position eines Radarsystems zu bestimmen, besteht in der Nutzung eines globalen Satellitennavigationssystems (GNSS) wie etwa Navstar GPS, GLONASS, GALILEO, QZSS oder BEIDOU. In manchen Situationen kann es jedoch vorkommen, dass Signale des jeweils genutzten GNSS temporär oder dauerhaft nicht verfügbar sind, Störungen oder Schwankungen unterliegen oder es nicht gewährleistet werden kann, dass empfangene GNSS-Signale korrekt, d.h. unverfälscht sind. Für solche Fälle kann prinzipiell eine manuelle Vorgabe der geographischen Position eines Radarsystems erfolgen. Um diese Position zu bestimmen, kann ein üblicherweise recht zeitraubendes geodätisches Positionsbestimmungsverfahren eingeleitet werden.

Die Druckschriften DE 10 2013 018 313 A1 und DE 10 2015 010 746 A1 offenbaren verschiedene Verfahren zur Selbstlokalisation eines Fahrzeugs, bei denen unter anderem zeitlich aufeinanderfolgend Bilder von Objekten, speziell eines überfahrenen Bodens, in der Umgebung erfasst und anhand der erfassten Bilder ermittelte Merkmale mit in einer Datenbank gespeicherten Vergleichsmerkmalen verglichen werden.

Die Druckschrift WO 2012/166329 A1 offenbart ein Verfahren zur Selbstlokalisation einer Kamera auf der Basis von Panoramaaufnahmen, deren markante Merkmale mit einer vorab generierten dreidimensionalen Panoramakarte abgeglichen werden.

### ZUSAMMENFASSUNG DER ERFINDUNG

Eine der Aufgaben der vorliegenden Erfindung besteht daher darin, eine schnelle, effiziente und von globalen Satellitennavigationssystemen unabhängige Positionsbestimmung für ein Radarsystem zu schaffen.

Die vorliegende Erfindung bezieht sich in einem ersten Aspekt auf ein Verfahren zur Positionsbestimmung eines mobilen Radarsystems, mit den Schritten des Abtastens der Umgebung des mobilen Radarsystems von der tatsächlichen geographischen Position aus mit Radarstrahlen, des Erzeugens einer nach Azimut, Elevation und Entfernung aufgelösten Clutter-Map aus Echosignalen der zur Abtastung verwendeten Radarstrahlen, des Extrahierens eines lokalen Landschaftshorizontprofils aus der erzeugten Clutter-Map mit einer Sequenz aus 2-Tupeln mit Azimut und Elevationswinkelwert, welcher die Grenzlinie zwischen Himmel und Erde markiert, des Vergleichens des lokalen Landschaftshorizontprofils mit einer Vielzahl von virtuellen Landschaftshorizontprofilen, welche durch Berechnung aus digitalen Geländemodellen der ungefähren Umgebung des mobilen Radarsystems ermittelt werden, und des Festlegens der tatsächlichen Position des mobilen Radarsystems als die demjenigen der Vielzahl von virtuellen Landschaftshorizontprofilen zugeordnete geographische Position, dessen Vergleich mit dem lokalen Landschaftshorizontprofil die höchste Korrelation aufweist.

Gemäß einem zweiten Aspekt umfasst ein mobiles Radarsystem mindestens einen Radarsensor, einen Datenspeicher und einen Prozessor. Der Prozessor ist dazu ausgelegt, den mindestens einen Radarsensor zur raumaufgelösten Abtastung der Umgebung des Radarsystems ansteuern, aus den durch die Abtastung gewonnenen Messdaten eine Clutter-Map zu erzeugen, aus der Clutter-Map ein lokales Landschaftshorizontprofil zu bestimmen, welches den lokalen Horizont um die tatsächliche geographische Position des Radarsystems azimutal aufgelöst darstellt, eine Vielzahl von virtuellen Landschaftshorizontprofilen aus in dem Datenspeicher gespeicherten digitalen Geländemodellen für eine Vielzahl von möglichen geographischen Positionen zu berechnen, das bestimmte lokale Landschaftshorizontprofil mit der Vielzahl von berechneten virtuellen Landschaftshorizontprofilen abzugleichen, und die tatsächliche Position des Radarsystems als die demjenigen der Vielzahl von virtuellen Landschaftshorizontprofilen zugeordnete geographische Position festzulegen, dessen Vergleich mit dem lokalen Landschaftshorizontprofil die höchste Korrelation aufweist.

Einer der Vorteile des erfindungsgemäßen Verfahrens und des erfindungsgemäßen Radarsystems besteht darin, dass die Positionsbestimmung erheblich genauer und schneller abläuft als mit herkömmlichen manuellen Eingabeverfahren oder einer geodätischen Methode. Zudem ist die Positionsbestimmung vollständig automatisierbar und erfordert keinen manuellen Eingriff durch einen Bediener des Radarsystems. Die Positionsbestimmung läuft ferner autonom und unter Nutzung lokal gewonnener Daten ab, so dass eine Störung des Positionsbestimmungsverfahrens von außen sehr schwierig ist.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen des Verfahrens kann für das Vergleichen des lokalen Landschaftshorizontprofils mit der Vielzahl von virtuellen Landschaftshorizontprofilen eine Bestimmung der Kovarianz oder der kleinsten quadratischen Abweichung erfolgen.

Gemäß einiger weiterer Ausführungsformen des Verfahrens können bei dem Vergleichen zusätzlich Entfernungsdaten zu demjenigen Hindernis berücksichtigt werden, welches den Horizont bei gegebenem Azimut nach unten begrenzt.

Gemäß einiger weiterer Ausführungsformen des Verfahrens können die Schritte des Erzeugens der Clutter-Map, des Extrahierens des lokalen Landschaftshorizontprofils und des Vergleichens des lokalen Landschaftshorizontprofils mit der Vielzahl von virtuellen Landschaftshorizontprofilen von einem Prozessor des mobilen Radarsystems durchgeführt werden. Alternativ dazu können die Schritte des Erzeugens der Clutter-Map, des Extrahierens des lokalen Landschaftshorizontprofils und des Vergleichens des lokalen Landschaftshorizontprofils mit der Vielzahl von virtuellen Landschaftshorizontprofilen von einer außerhalb des mobilen Radarsystems befindlichen Recheneinrichtung durchgeführt werden.

Gemäß einiger Ausführungsformen des Radarsystems kann das Radarsystem weiterhin ein mit dem Prozessor verbundenes Kommunikationsmodul aufweisen, über welches der Prozessor mit einer entfernten Kommandozentrale Daten austauschen kann.

Gemäß einiger weiterer Ausführungsformen des Radarsystems kann das Radarsystem weiterhin einen mit dem Prozessor verbundenen GNSS-Empfänger aufweisen, welcher dazu ausgelegt ist, eine Positionsbestimmung des Radarsystems über ein globales Satellitennavigationssystem vorzunehmen.

Gemäß einiger weiterer Ausführungsformen des Radarsystems kann der Prozessor dazu ausgelegt sein, einen Vergleich des lokalen Landschaftshorizontprofils mit der Vielzahl von virtuellen Landschaftshorizontprofilen durch eine Bestimmung der Kovarianz oder der kleinsten quadratischen Abweichung durchzuführen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild von Schritten eines Verfahrens zur Positionsbestimmung eines mobilen Radarsystems gemäß einer Ausführungsform der Erfindung;
Fig. 2 ein beispielhaftes Diagramm von lokalen Landschaftshorizontprofilen; und
Fig. 3 ein schematisches Schaubild eines mobilen Radarsystems gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Eine Clutter-Map im Sinne der vorliegenden Erfindung ist eine ortsaufgelöste digitale Karte, in der auflösungs- oder gebietszellenweise bekannte Bodenstörer nach Richtung, Entfernung und Stärke als Funktion von Azimut und Elevation abgebildet werden. Aus derartigen Clutter-Maps können azimutal aufgelöste Landschaftshorizonte bestimmt werden, d.h. eine Sequenz von 2-Tupeln aus jeweils einem Azimutwinkel in einem lokalen Horizontkoordinatensystem und dem jeweils zugehörigen Elevationswinkel, oberhalb dessen freie Sicht in den Himmel gewährleistet ist.

Die Sequenz von 2-Tupeln aus Azimut und Elevationswinkel kann zur Bildung eines Landschaftshorizontprofils eines jeweiligen tatsächlichen Standorts eines Radarsystems genutzt werden, indem für das Radarsystem durch Radarabtastung der Umgebung in jeder azimutalen Richtung zunächst eine Clutter-Map erzeugt und aus der so erzeugten Clutter-Map ein lokales Landschaftshorizontprofil gewonnen wird. Das lokale Landschaftshorizontprofil ist gewissermaßen ein standortgebundener Fingerabdruck der lokalen Umgebung aus der Sicht des mobilen Radarsystems.

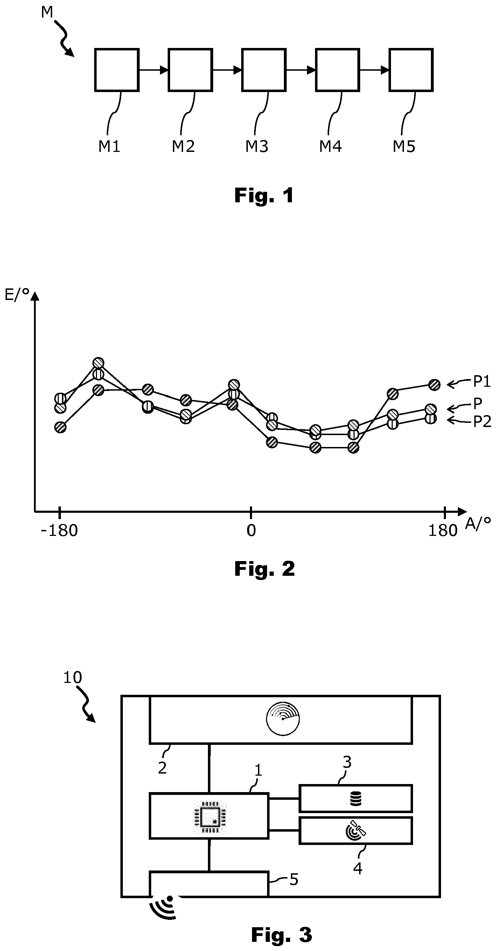

Fig. 1 zeigt ein schematisches Blockschaubild von Schritten eines Verfahrens M zur Positionsbestimmung, insbesondere zur momentanen Positionsbestimmung eines mobilen Radarsystems. Das Verfahren M kann beispielsweise für ein mobiles Radarsystem 10, wie im Zusammenhang mit Fig. 3 beschrieben, genutzt werden. Das mobile Radarsystem 10 kann in einem ersten Schritt M1 zunächst von seinem momentanen Standort aus die Umgebung mit Radarstrahlen abtasten. Die Echosignale werden nach Azimut, Elevation und Entfernung aufgelöst ausgewertet, um in einem Schritt M2 eine Clutter-Map zu erzeugen.

Die Erzeugung der Clutter-Map muss nicht notwendigerweise in dem Radarsystem 10 selbst erfolgen; es kann auch möglich sein, die gewonnenen Radarsignale an eine entfernte Kommandozentrale des Radarsystems 10 zu übersenden. In der Kommandozentrale können dann die entsprechenden Rechenvorgänge zur Erzeugung der Clutter-Map vorgenommen werden. Da die gewonnenen Radarsignale häufig ohnehin an die Kommandozentrale übermittelt werden, kann der Datenverkehr minimiert werden, indem die Kommandozentrale die Position des Radarsystems 10 anhand der übermittelten Radarsignale ermittelt und dem Radarsystem 10 seine Position mitteilt.

Aus der in Schritt M2 ermittelten Clutter-Map kann in Schritt M3 ein lokales Landschaftshorizontprofil extrahiert werden. Dieses lokale Landschaftshorizontprofil besteht aus einer Sequenz von 2-Tupeln mit Azimut und zugehörigem Elevationswinkel. Der Elevationswert gibt dabei in Abhängigkeit vom jeweiligen Azimut denjenigen Elevationswinkel an, der die Grenzlinie zwischen Himmel und Erde markiert.

Ein beispielhaftes Landschaftshorizontprofil P ist in Fig. 2 in einer zweidimensionalen Auftragung mit Azimut A als Abszisse und Elevation E als Ordinate gezeigt. Die azimutale Auflösung kann dabei variieren und es können selbstverständlich feinere oder gröbere Azimutauflösungen als in Fig. 2 dargestellt gewählt werden. Das Landschaftshorizontprofil P stellt das tatsächliche Landschaftshorizontprofil dar, wie es aus den durch das Radarsystem gewonnenen Clutterdaten extrahiert worden ist.

In Schritt M4 wird das lokale Landschaftshorizontprofil P mit einer Vielzahl von virtuellen Landschaftshorizontprofilen verglichen. Die virtuellen Landschaftshorizontprofile werden dabei durch Berechnung aus digitalen Geländemodellen (DGM) der ungefähren Umgebung des mobilen Radarsystems 10 ermittelt. Beispielhaft sind in Fig. 2 zwei solcher virtuellen Landschaftshorizontprofile P1 und P2 gezeigt. Jedes der virtuellen Landschaftshorizontprofile P1 und P2 ist dabei einer genauen Position in dem DGM zugeordnet. Dasjenige der virtuellen Landschaftshorizontprofile P1 und P2, das mit dem lokalen Landschaftshorizontprofil P am besten übereinstimmt, kann als die wahre Position des mobilen Radarsystems 10 am besten widerspiegelnd angesehen werden. In Fig. 2 beispielweise ist die kumulierte Abweichung der einzelnen Elevationswerte E je passendem Azimutwert A für das virtuelle Landschaftshorizontprofil P2 wesentlich geringer als die entsprechende kumulierte Abweichung des virtuellen Landschaftshorizontprofils P1. Im Beispiel der Fig. 2 kann daher angenommen werden, dass die zu dem virtuellen Landschaftshorizontprofil P2 gehörige geographische Position die tatsächliche Position des mobilen Radarsystems 10 angibt.

Für den Vergleich der virtuellen Landschaftshorizontprofile mit dem lokalen Landschaftshorizontprofil kann ein Korrelationsverfahren eingesetzt werden, beispielsweise eine Bestimmung der Kovarianz oder der kleinsten quadratischen Abweichung. Je besser die verglichenen Landschaftshorizontprofile übereinstimmen, desto höher wird der berechnete Korrelationskoeffizient sein.

In Schritt M5 des Verfahrens M wird daher die tatsächliche Position des mobilen Radarsystems 10 als die demjenigen der Vielzahl von virtuellen Landschaftshorizontprofilen zugeordnete geographische Position festgelegt, das am besten mit dem lokalen Landschaftshorizontprofil übereinstimmt. Neben den Informationen über azimutaler Elevation des lokalen Horizontes können auch Entfernungsdaten zu demjenigen Hindernis berücksichtigt werden, welches den Horizont bei gegebenem Azimut nach unten begrenzt. Dadurch kann die Positionsbestimmung noch weiter verfeinert werden.

Ein beispielhaftes mobiles Radarsystem 10, für welches das Verfahren M der Fig. 1 eingesetzt werden kann, ist in Fig. 3 schematisch illustriert. Das mobile Radarsystem 10 weist einen Prozessor 1, ein oder mehrere mit dem Prozessor 1 gekoppelte Radarsensoren 2, einen mit dem Prozessor 1 gekoppelten Datenspeicher 3, einen mit dem Prozessor 1 gekoppelten GNSS-Empfänger 4 sowie ein mit dem Prozessor 1 gekoppeltes Kommunikationsmodul 5 auf. Der Prozessor 1 kann beispielsweise eine zentrale Recheneinrichtung des Radarsystems 10 sein, welches die Funktion des Radarsystems 10 und dessen Komponenten steuert. Konfigurationsdaten des Radarsystems können beispielsweise in dem Datenspeicher 3 abgelegt werden, auf die der Prozessor 1 während des Betriebs des mobilen Radarsystems 10 zugreifen kann.

Beispielsweise kann bei einem Hochfahren oder Aktivieren des Radarsystems 10 aus einem Ruhezustand oder deaktivierten Zustand ein Verfahren zur initialen Positionsbestimmung, wie im Zusammenhang mit den Fig. 1 und 2 erläutert, durchgeführt werden. Dazu kann der Prozessor 1 die Radarsensoren 2 zur raumaufgelösten Abtastung der Umgebung des Radarsystems 10 ansteuern. Der Prozessor 1 kann nach Erhalt der Messdaten der Radarsensoren 2 entweder selbst eine Clutter-Map erzeugen oder die erhaltenen Messdaten über das Kommunikationsmodul 5 drahtlos an eine Kommandozentrale übermitteln, die dann die Erzeugung der Clutter-Map vornimmt.

Entweder im Prozessor 1 oder in einer Recheneinrichtung der Kommandozentrale kann aus der Clutter-Map dann ein lokales Landschaftshorizontprofil bestimmt werden, welches den lokalen Horizont um den tatsächlichen geographischen Standpunkt des Radarsystems 10 azimutal aufgelöst widerspiegelt. Wenn das Radarsystem in dem Datenspeicher 3 digitale Geländemodelle der Umgebung des Radarsystems 10 gespeichert hat, kann der Prozessor 1 selbst einen Abgleich des lokalen Landschaftshorizontprofils mit einer Vielzahl von virtuellen Landschaftshorizontprofilen vornehmen, die aus den digitalen Geländemodellen für eine Vielzahl von möglichen geographischen Positionen berechnet werden können. Alternativ dazu kann der Abgleich auch in der Kommandozentrale vorgenommen werden, was den Vorteil hat, dass die digitalen Geländemodelle nicht notwendigerweise in dem Datenspeicher 3 des Radarsystems 10 vorgehalten werden müssen, sondern lediglich in der Kommandozentrale verfügbar sein müssen.

Nach dem erfolgten Abgleich kann der Prozessor 1 eine Positionsbestimmung des Radarsystems 10 vornehmen, indem diejenige der Vielzahl von virtuellen Landschaftshorizontprofilen zugeordnete geographische Position als tatsächliche Position des Radarsystems angenommen wird, für die das zugehörige virtuelle Landschaftshorizontprofil am besten mit dem lokalen Landschaftshorizontprofil übereinstimmt.

Diese Vorgehensweise bei der Positionsbestimmung des Radarsystems 10 ist insbesondere dann besonders vorteilhaft, wenn der GNSS-Empfänger 4 des Radarsystems 10 keine oder nur unzuverlässige GNSS-Signale für eine Positionsbestimmung empfangen kann.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Verfahren (M) zur Positionsbestimmung eines mobilen Radarsystems (10), mit den Schritten:
Abtasten (M1) der Umgebung des mobilen Radarsystems (10) von der tatsächlichen geographischen Position aus mit Radarstrahlen;
Erzeugen (M2) einer nach Azimut, Elevation und Entfernung aufgelösten Clutter-Map aus Echosignalen der zur Abstastung verwendeten Radarstrahlen;
Extrahieren (M3) eines lokalen Landschaftshorizontprofils (P) aus der erzeugten Clutter-Map mit einer Sequenz aus 2-Tupeln mit Azimut und Elevationswinkelwert, welcher die Grenzlinie zwischen Himmel und Erde markiert;
Vergleichen (M4) des lokalen Landschaftshorizontprofils (P) mit einer Vielzahl von virtuellen Landschaftshorizontprofilen (P1; P2), welche durch Berechnung aus digitalen Geländemodellen der ungefähren Umgebung des mobilen Radarsystems (10) ermittelt werden; und
Festlegen (M5) der tatsächlichen Position des mobilen Radarsystems (10) als die demjenigen der Vielzahl von virtuellen Landschaftshorizontprofilen (P1; P2) zugeordnete geographische Position, dessen Vergleich mit dem lokalen Landschaftshorizontprofil (P) die höchste Korrelation aufweist.

2. Verfahren (M) gemäß Anspruch 1, wobei für das Vergleichen (M4) des lokalen Landschaftshorizontprofils (P) mit der Vielzahl von virtuellen Landschaftshorizontprofilen (P1; P2) eine Bestimmung der Kovarianz oder der kleinsten quadratischen Abweichung erfolgt.

3. Verfahren (M) gemäß einem der Ansprüche 1 und 2, wobei bei dem Vergleichen (M4) zusätzlich Entfernungsdaten zu demjenigen Hindernis berücksichtigt werden, welches den Horizont bei gegebenem Azimut nach unten begrenzt.

4. Verfahren (M) gemäß einem der Ansprüche 1 bis 3, wobei das Erzeugen (M2) der Clutter-Map, das Extrahieren (M3) des lokalen Landschaftshorizontprofils (P) und das Vergleichen (M4) des lokalen Landschaftshorizontprofils (P) mit der Vielzahl von virtuellen Landschaftshorizontprofilen (P1; P2) von einem Prozessor (3) des mobilen Radarsystems (10) durchgeführt wird.

5. Verfahren (M) gemäß einem der Ansprüche 1 bis 3, wobei das Erzeugen (M2) der Clutter-Map, das Extrahieren (M3) des lokalen Landschaftshorizontprofils (P) und das Vergleichen (M4) des lokalen Landschaftshorizontprofils (P) mit der Vielzahl von virtuellen Landschaftshorizontprofilen (P1; P2) von einer außerhalb des mobilen Radarsystems (10) befindlichen Recheneinrichtung durchgeführt wird.

6. Mobiles Radarsystem (10), umfassend:
mindestens einen Radarsensor (2);
einen Datenspeicher (3); und
einen Prozessor (1), welcher dazu ausgelegt ist, den mindestens einen Radarsensor (2) zur raumaufgelösten Abtastung der Umgebung des Radarsystems (10) anzusteuern, aus den durch die Abtastung gewonnenen Messdaten eine Clutter-Map zu erzeugen, aus der Clutter-Map ein lokales Landschaftshorizontprofil (P) zu bestimmen, welches den lokalen Horizont um die tatsächliche geographische Position des Radarsystems (10) azimutal aufgelöst darstellt, eine Vielzahl von virtuellen Landschaftshorizontprofilen (P1; P2) aus in dem Datenspeicher (3) gespeicherten digitalen Geländemodellen für eine Vielzahl von möglichen geographischen Positionen zu berechnen, das bestimmte lokale Landschaftshorizontprofil (P) mit der Vielzahl von berechneten virtuellen Landschaftshorizontprofilen (P1; P2) abzugleichen, und die tatsächliche Position des Radarsystems (10) als die demjenigen der Vielzahl von virtuellen Landschaftshorizontprofilen (P1; P2) zugeordnete geographische Position festzulegen, dessen Vergleich mit dem lokalen Landschaftshorizontprofil (P) die höchste Korrelation aufweist.

7. Radarsystem (10) gemäß Anspruch 6, weiterhin mit:
einem mit dem Prozessor (1) verbundenen Kommunikationsmodul (5), über welches der Prozessor (1) mit einer entfernten Kommandozentrale Daten austauschen kann.

8. Radarsystem (10) gemäß einem der Ansprüche 6 und 7, weiterhin mit:
einem mit dem Prozessor (1) verbundenen GNSS-Empfänger (4), welcher dazu ausgelegt ist, eine Positionsbestimmung des Radarsystems (10) über ein globales Satellitennavigationssystem vorzunehmen.

9. Radarsystem (10) gemäß einem der Ansprüche 6 bis 8, wobei der Prozessor (1) dazu ausgelegt ist, einen Vergleich des lokalen Landschaftshorizontprofils (P) mit der Vielzahl von virtuellen Landschaftshorizontprofilen (P1; P2) durch eine Bestimmung der Kovarianz oder der kleinsten quadratischen Abweichung durchzuführen.
